# EUROPEAN PATENT APPLICATION

(11) **EP 2 026 284 A1**
(43) Date of publication of application: **18.02.2009**
(21) Application number: 07109588.9
(22) Date of filing: 05.06.2007
(51) Int. Cl.: G06T 11/60

(54) **Apparatus and method for providing a container with a customized design**

(71) Applicant: Philip Morris Products S.A., 2000 Neuchâtel (CH)
(72) Inventor: The designation of the inventor has not yet been filed
(74) Representative: Bohest AG

(57) **Abstract**

An apparatus for providing a container (3) having at least one surface with a customized design, comprises:
a memory containing at least one set of data comprising a plurality of design elements (320,321,322);
a user interface (10) comprising interface means and display means enabling the consumer to interact with the apparatus to allow the generation of a customized design of at least one surface of a virtual whitepack through selection and placement of at least one of the design elements (320,321,322) and through visual representation of the selected at least one design element (320,321,322) on the at least one surface of the virtual whitepack,
an application unit (13) for applying the customized design of the at least one surface of the virtual whitepack to at least one surface of a whitepack (4) so as to obtain the container (3) having the at least one surface with the customized design, and
a logic control unit (12) to which the memory, the user interface and the application unit are connected.

## Description

The present invention relates to an apparatus and a method for providing a container having an individually customized surface design or outer appearance. Furthermore, the invention relates to a container (whitepack) for use in said apparatus and method.

It is known to manufacture or vend various consumer goods with a personalized printed design, such as watches, card products, wrapping paper, compact discs or stamps. For example, US-A-6,473,666 discloses a watch manufacturing machine which chooses and assembles components of a watch in accordance with design information selected or prepared by the customer. The dial of the watch may be customized by printing the designed pattern on the dial surface.

US-A-5,615,123 and WO-A-92/17851 provide systems for creating and producing personalized greeting cards. The systems allow the sender, for example, to personalize a greeting card by adding the name or other personalized data of the recipient. The known vending machines may include audio or video presentations of available products.

There still is a need for a system allowing consumers to create and produce containers for consumer goods which have an individually customized design. It is an object of the present invention to provide such system.

The present invention provides an apparatus which enables a user to individually design at least a part of one or more panels of a container for packaging consumer goods. Such container with an individually customized surface design is obtained by applying at least one selected design element to a dedicated surface area of a so-called 'whitepack'. As used herein, the term 'whitepack' refers to a container with one or more external surface areas dedicated to modification and customization by a user or consumer. Preferably, modification of a surface area and customization of the whitepack involve applying one or more design elements to at least one of the dedicated surface areas. A dedicated surface area is a predetermined space on the external surface of a panel of the whitepack which space is suitable for modification in an apparatus of the present invention, for example by printing.

Generally, the present invention provides an apparatus for providing a containger with a customized design, comprising:
a memory containing at least one set of data comprising a plurality of design elements;
a user interface enabling the consumer to interact with the apparatus, said user interface comprising interface means and display means;
an application unit for applying at least one selected desgin element to the at least one surface area on a whitepack which area is dedicated for customization; and
a logic control unit.

More specifically, the present invention provides an apparatus for providing a container having at least one surface with a customized design, comprising:
a memory containing at least one set of data comprising a plurality of design elements;
a user interface comprising interface means and display means enabling the consumer to interact with the apparatus to allow the generation of a customized design of at least one surface of a virtual whitepack through selection and placement of the at least one design element and through visual representation of the at least one selected design element on the at least one surface of the virtual whitepack,
an application unit for applying the customized design of the at least one surface of the virtual whitepack to at least one surface of a whitepack so as to obtain the container having the at least one surface with the customized design, and
a logic control unit to which the memory, the user interface and the application unit are connected.

A set of data in the memory may, for example, include image files, fonts and other design elements. Preferably, one set of data comprises the plurality of predetermined design elements available for customization of a particular brand. Advantageously, this one set of data is arranged in one archive or folder. Design elements available for customization include, for example, icons, images, colours, lettering and surface structures. The user may choose to select one or more design elements to customize a particular dedicated surface area. For example, the user may choose to apply a backgound colour on part or all of said dedicated area (which colour is different from the colour originally provided for), branding-related information including symbols and one or more other icons.

If desired, the memory may provide additional memory space to allow the transfer/upload of additional data, for example via the Internet.

Generally, customization of the whitepack may involve graphic or haptic modification, or a combination thereof, of the whitepack surface through application of at least one selected design element to a dedicated surface area. Preferably, the modifaction is graphic and implemented by printing one or more design elements onto the dedicated surface area or areas. Typically, the whitepack differs from the customized container provided by the present invention in that all dedicated surface areas have been modified with one or more design elements selected by the user.

Generally, the whitepack may be made of any suitable material or combination of materials including, for example, paper, cardboard, metal and plastic. Advantageously, the at least one panel of the whitepack comprising a dedicated surface area is made of a material which can readily be printed by a suitable printing unit. Preferably, the whitepack is made of paper, more preferably it is made of cardboard. While the paper or cardboard may or may not be lacquered outside the dedicated surface areas, a dedicated surface area has a surface suitable for modification.

Preferably, the whitepack is a container of substantially rectangular parallelepipedal shape, with right-angled longitudinal and right-angled transverse edges. If desired, the whitepack may comprise one or more rounded longitudinal edges, rounded transverse edges, bevelled longitudinal edges, bevelled transverse edges, or any combination thereof. Preferably, the whitepack is a hinge-lid container comprising a box portion and a lid portion hinged to said box portion. Advantageously, the whitepack is filled with the products to be packaged. This will enhance the stability and rigidity of such whitepack during the customization operation. For example, the whitepack may be filled with smoking articles. The substantially rectangular parallelepipedal whitepack has a front panel, a rear panel, two side panels, a bottom panel and a top panel. While a panel may have more than one dedicated surface area, preferably it has only one such area. Preferably, only one or two of the whitepack panels provide one or more surface areas dedicated for customization with at least one predetermined design element. In case of two panels with dedicated surface areas, the panels are preferably opposite each other. Most preferably, the front and the rear panel of the whitepack each provide one dedicated free surface area for customization by means of the apparatus according to the invention. Advantageously, a dedicated surface area is rectangular and limited by a frame of up to about 4 mm width. Such frame has the advantage of position tolerance compensation and may or may not be visible on the whitepack. However, it will be visible on the customized container.

In a particularly preferred embodiment of the present invention, the whitepack is a container of smoking articles. Typically, such container is a so-called 'hard pack' made of cardboard containing a plurality of smoking articles such as, for example, cigarettes, cigarillos, cigars or tobacco portions, or is a display carton containing a plurality of individual packs of smoking articles. Most preferably, the whitepack is a container of smoking articles from which the transparent outer wrapper has been removed. Alternatively, the whitepack may be a reusable container which can be refilled with a suitable refill pack of cigarettes.

Particularly preferred is a whitepack which is a hinge-lid container of smoking articles. Such whitepack is characterized in that it has a first dedicated surface area which is rectangular and extends across the upper half of the front panel (including the lid) and a second dedicated surface area which is rectangular and extends across a part of the rear panel below the hinge line. Preferably, both dedicated surface areas extend across the entire width of the respective panel. Preferably, the second dedicated surface area is smaller than the first dedicated surface area. Both dedicated surface areas are limited by rectangular inner frames. The inner frame of the first dedicated surface area abuts against both longitudinal edges and the top transverse edge of the container front panel. The inner frame of the second dedicated surface area abuts against both longitudinal edges of the container rear panel. Preferably, the surface design of all whitepack panels is predetermined outside the dedicated surface areas. For example, the panels are covered with preprinted information, graphic or other elements or any combination thereof provided by the vendor of the pack. On the customized container provided by the present invention, such preprinted information and elements are retained without change. Such preprinted information and elements may comprise, for example, product or branding related information, information required by law, such as health warnings, and a label, such as a tax stamp.

The at least one set of data comprises a plurality of design elements, for example a library of predetermined design elements from which the user may select. To enable brand specific customization several libraries may be provided for in the memory. For example, the accessibility of a particular library may depend on the presence of a particular identification mark on the whitepack. More specifically, the whitepack may be marked with a bar code or a graphic symbol which encodes specific branding information and thus determines which set of data and library of design elements is accessible by and visible to the user. Preferably, one or more parameters of a given design element selectable by the user can be modified within predetermined ranges. Parameters which may be subject to modification by the consumer include, for example, size, colour or orientation of the design element. This provides the consumer with a broader range of design options. Design elements can be placed in such a way that only parts of the original design elements are within the frame, those parts extending beyond the frame will be cut off and not applied.

The user interface allows to visually represent and control the placing of at least one selected design element to the desired dedicated surface area of the whitepack. Specifically, the user inferface enables the user to select at least one design element from the accessible set of data with design elements. Preferably, the user interface also enables the user to preview the application of a selected design element to the respective dedicated surface area on a virtual whitepack shown on a display. Suitable interface means are known in the art and include, for example, a touch screen, a keyboard, a mouse, a track ball or a combination thereof. The user interface may also include tear-off menues, pull-down menues, floating buttons, dialog boxes, alternate keyboard command or mouse shortcuts, and the like. Suitable display means are known in the art and include, for example, a screen, a beamer, or both.

The application unit comprises suitable means to apply a selected design element onto a chosen dedicated surface area of the whitepack. The application of the at least one design element may be achieved through any technique and means suitable for graphically or haptically modifying the dedicated surface areas of the whitepack. Suitable application techniques include, for example, coating, spraying, embossing, debossing, printing and any combination of such techniques. Generally, the techniques and means must be suitable for high quality application to the material of the whitepack, in particular to the material of the dedicated surface areas of the whitepack. To facilitate application of the at least one design element, the panels of the whitepack which have dedicated surface areas have a plane external surface.

The memory, the user interface and the application unit are operatively connected to a logic control unit. Operatively connected includes transmission or communication means such as electrical means, radio, network, and the like. Preferably, the memory, the user interface, the appplication unit and the logic control unit are integrated into the same component. The logical control unit allows the user to save a design and store customization data in the memory.

Most preferably, the at least one selected design element is applied to a designated surface area of the whitepack by printing. Therefore, in a preferred embodiment the application unit of the apparatus according to the present invention is a printing unit for printing the at least one selected design element onto the dedicated surface areas. The printing unit may, for example, comprise a laser printing head or more preferably an ink jet printing head performing the printing operations. The printing unit may comprise one or more printing heads. Preferably, the printing unit comprises one ink jet printing head.

In a preferred aspect of the present invention, the apparatus may comprise a handling unit which allows to position the whitepack such that a selected design element is applied within the boundaries of the assigned dedicated surface area. Preferably, the selected design elements are applied, for example printed, while the whitepack is moving through the printing unit. In this respect, it is to be noted that the speed with which the whitepack is moved during application (e.g. ink-jet printing) may be adapted to the respective application technique so that the whitepack can be moved with optimal speed. The handling unit comprises means for transportation. Such means include means for linear or rotational movement, or both. For example, the handling unit may comprise means for rotational movement to move the whitepack from a first printing position, in which the first whitepack panel with a dedicated surface area is arranged in the same plane as the printing plane of the printer head, to a second printing position, in which the second whitepack panel with a dedicated surface area is arranged in the same plane as the printing plane of the printer head. The handling unit may also comprise positioning means such as sensors, registration marks and stops.

In a further embodiment according to the present invention, the apparatus comprises a console installed at a customer location. Such customer location is any point of disposal of the whitepack to a consumer whether by sale or otherwise. For example, if the whitepack is a container of cigarettes, the customer location may be a tobacco kiosk, brand store, duty free shop or other point of sale, or a lounge, promotional stand or other point of distribution. Preferably, the console enables a user to create and produce the customized container at the same location.

In a preferred embodiment the console according to the present invention comprises a feed-channel for manual insertion of the whitepack and a handling unit comprising transportation means for transporting the whitepack to the (first) printing position. Alternatively, the console may comprise a magazine containing a stock of whitepacks. In this embodiment of the invention, the handling unit additionally comprise means for grasping a single whitepack from the magazine.

In another embodiment of the apparatus according to the invention, the user interface may be installed at a private location. For example, the user interface may be part of a personal computer at a user's home. In this embodiment the other essential and optional components of the apparatus of the invention are located remotely from the user interface. For example, the at least one design element selected by means of the user interface may be transmitted to the application unit via a communication network, for example via Internet, where it is applied to one or more whitepacks. This is a convenient way for the user to design the customized container at his personal computer at home and to have it produced at a remote location. The consumer may thus order one or more cartons comprising a plurality of containers with his customized design.

The invention is further described by way of example with reference to the accompanying drawings in which:
- Fig. 1: shows a perspective view of an embodiment of an apparatus for creating and producing an individually customized container of smoking articles comprising a console (without rear panel);
- Fig. 2: shows a sectional view of the console of Fig. 1;
- Fig. 3: shows a front view of the console of Fig. 1;
- Fig. 4: shows a flow chart of the steps which are involved in the use of the console of Fig. 1;
- Fig.5-13: show the steps involved in printing the designated surface areas on the front panel and the rear panel starting from a whitepack, and
- Fig. 14: shows a rear perspective view of an individually customized container of smoking articles.

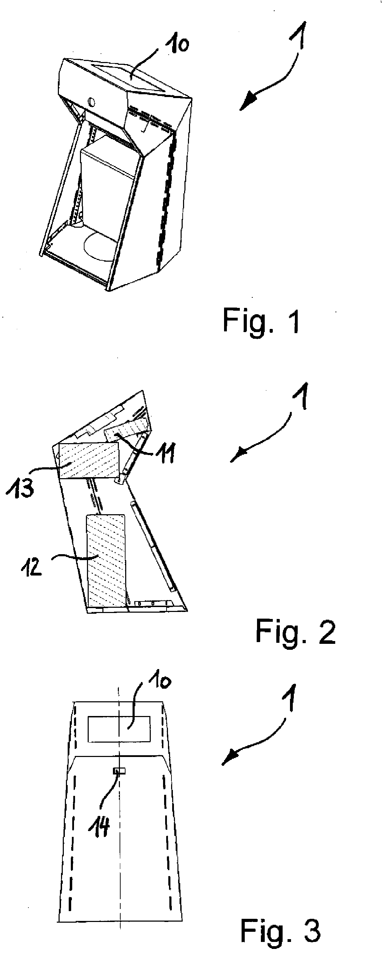

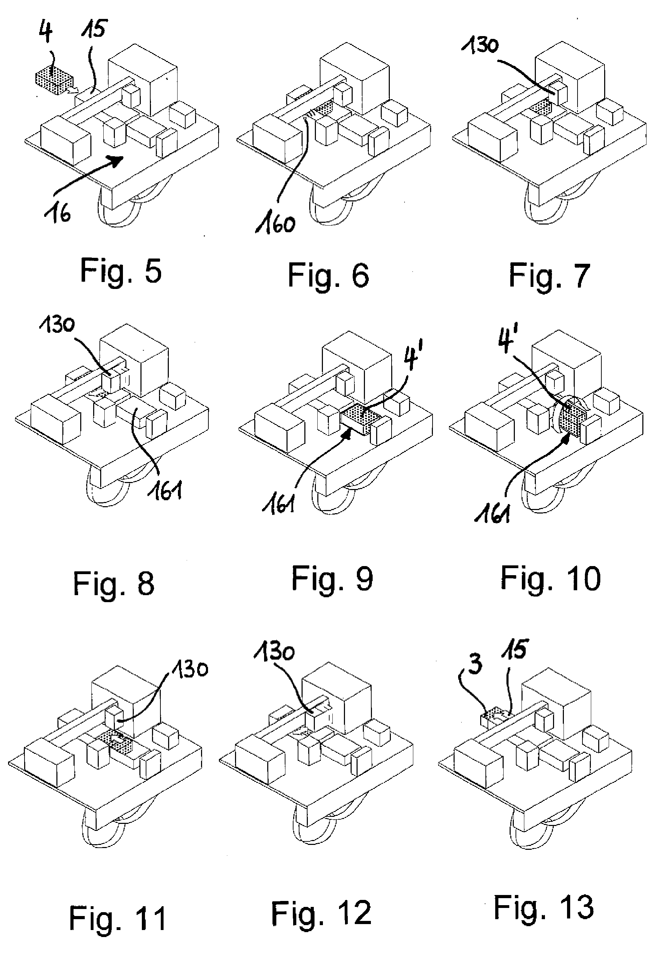

Console 1 shown in Figures 1 to 3 is located at a customer location. Console 1 comprises a graphical user interface (software-implemented) comprising a touch screen 10 for entering commands and for visual representation. In addition, console 1 comprises a video-projector or screen 11 as an additional display means which allows others to watch the customization operation. A computer 12 and an ink jet printer 13 are arranged within console 1. A plurality of design elements is stored in the memory of computer 12 in one or more sets of data, which can be accessed by the user during customization of the surface design of a whitepack of smoking articles. At its front panel, console 1 is provided with an opening 14 which allows the whitepack to be inserted into a feed-channel 15 (see Figs. 5-13).

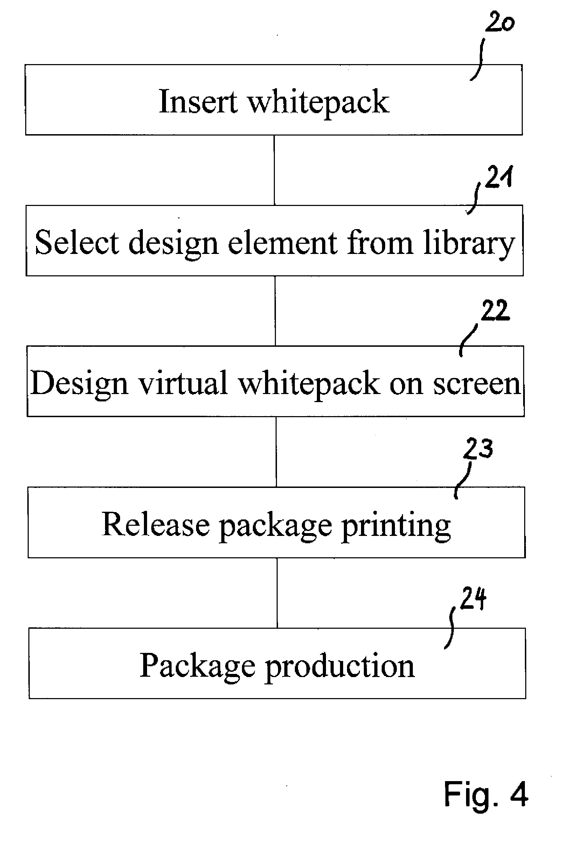

Creation and production of the customized container of smoking articles at console 1 involves the steps shown in the flow chart of Fig. 4.

In a first step 20, the user inserts a rectangular parallelepipedal whitepack 4 of smoking articles made of cardboard through the opening of the console into the feed channel 15 (see Figs. 5-13). A bar-code identification mark may be read automatically (see Fig. 6) by any suitable bar-code reading means 160, and the library of design elements preassigned to the identified brand is made accessible to the user. The next step 21 is the selection a design element from the accessible library of design elements. Subsequent step 22 is the design of a virtual whitepack which is displayed on the screen 10 by assigning the selected design element to a dedicated surface area on the virtual whitepack. To facilitate steps 21 and 22, the screen 10 may be split such that one area of the screen 10 shows the virtual whitepack to be customized while the other area displays the design elements of the library from which the user may select his/her design element or elements. Advantageously, the user is enabled to change a selected design element with regard to size, colour and orientation within certain predetermined ranges.

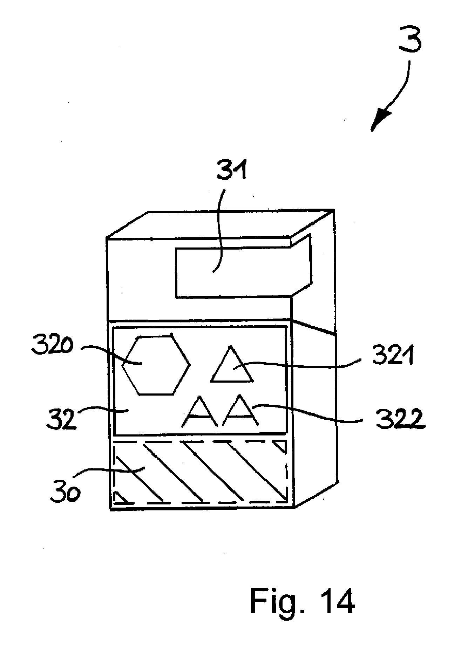

Fig. 14 shows a rear perspective view of a customized hinge-lid container 3 of smoking articles. Area 30 was preprinted on the whitepack and provides a health warning. The additional information and graphic elements preprinted on the whitepack are not shown. Tax stamp 31 extends across the lid rear panel and the right side panel. Area 32 in the upper half of the box rear panel is a dedicated surface area which has been customized by application of four design elements. Graphic design elements 320 and 321 as well as two characters 322, for example representing the user's initials, have been selected and printed on the area 32.

The image of the virtual whitepack on the screen 10 of console 1 may be two-dimensional or three-dimensional; a two-dimensional image of the surface of the panel to be customized is sufficient. Accordingly, during customization of the rear panel of the virtual whitepack only this rear panel may be shown on screen 10 of console 1.

For customization of the rear panel of the virtual whitepack on screen 10 the consumer selects a design element from the file and assigns it to the dedicated surface area on the rear panel (area 32 of the customized container shown in Fig. 14), for example said icon onto the surface area. Once the user has finished the customization of the virtual whitepack he confirms his selections via the user interface. The printing operations are then released in accordance with step 23 of the flow chart of Fig. In subsequent step 24, the customized container is produced by means of the printer 13 at console 1. This is explained in further detail below.

Once the consumer has finalized the design of the whitepack 4, the whitepack is drawn through a feed-channel 15 (see Fig. 5) into a first printing position by a handling unit 16. When the whitepack 4 has reached the first printing position (see Fig. 7), a printing head 130 or other printing means of the printer 13 (see Fig. 2) of console 1 prints the selected design elements within area 32 (see Fig. 14) of the front panel of the whitepack 4, as schematically indicated in Fig. 8. Once printing on the front panel of the whitepack 4 has been completed, the whitepack 4' - already customized on its front panel - is rotated by 180 degrees and brought into a second printing position (see Fig. 11). In the second printing position, the design elements selected for the dedicated surface area on the rear panel of the customized whitepack 4' are printed (see Fig. 12). After printing on the rear panel has been completed, the final customized container of smoking articles 3 is moved through feed-channel 15 to opening 14 in the front panel out of console 1, where the user receives his individually customized container 3.

## Claims

1. Apparatus for providing a container (3) having at least one surface with a customized design, comprising:
- a memory containing at least one set of data comprising a plurality of design elements (320,321,322);
- a user interface (10) comprising interface means and display means enabling the consumer to interact with the apparatus to allow the generation of a customized design of at least one surface of a virtual whitepack through selection and placement of at least one of the design elements (320,321,322) and through visual representation of the selected at least one design element (320,321,322) on the at least one surface of the virtual whitepack,
- an application unit (13) for applying the customized design of the at least one surface of the virtual whitepack to at least one surface of a whitepack (4) so as to obtain the container (3) having the at least one surface with the customized design, and
- a logic control unit (12) to which the memory, the user interface and the application unit are connected.

2. Apparatus according to claim 1, wherein the at least one surface of the whitepack (4) comprises one or more dedicated areas to which application of the customized design is allowed only, and wherein the interface means is adapted to allow placement of a selected design element (320,321,322) only within one or more dedicated areas of the virtual whitepack corresponding to the one or more dedicated areas of the whitepack to which application of the customized design is allowed.

3. Apparatus according to claim 1 or claim 2, further comprising reading means (160) for the reading of an identification mark being provided on the whitepack (4).

4. Apparatus according to any one of the preceding claims, comprising a console (1) in which the memory, the user interface (10) the application unit (13) and the logic control unit (12) are integrated.

5. Apparatus according to claim 4, wherein the console (1) comprises a handling unit (16) comprising transportation means for transporting the whitepack (4) to an application position where application of the customized design to the whitepack (4) is performed.

6. Apparatus according to claim 5, wherein the console (1) comprises a feed-channel (15) for manual insertion of the whitepack (4), or a magazine containing a plurality of whitepacks from which the whitepack is grasped automatically.

7. Apparatus according to claim 3, wherein the user interface is installed at one location while the other components of the apparatus are installed at a location remote from the user interface.

8. A whitepack (4) for use in an apparatus according to any one of the preceding claims, comprising at least one surface having at least one dedicated surface area adapted to be customized by a user or consumer.

9. A whitepack (4) according to claim 8, wherein the whitepack is a container of a substantially rectangular parallelepipedal shape with right-angled longitudinal and right-angeld transverse edges, and wherein the whitepack has a front panel, a rear panel, two side panels, a bottom panel and a top panel, and wherein the dedicated surface area adapted to be customized by a user or consumer is provided on the front panel, on the rear panel, or on both.

10. A whitepack (4) according to claim 8 or claim 9, wherein the whitepack is filled with the consumer goods to be packaged.

11. A whitepack according to any one of claims 8 to 10, wherein the at least one dedicated surface area adapted to be customized is limited by a frame.

12. A whitepack according to any one of claims 8 to 11, wherein the surface design of the whitepack panels is predetermined outside the dedicated surface areas, which is retained without change during customization.

13. A method for providing a container (3) having at least one surface with a customized design, comprising the steps of:
- generating a customized design of at least one surface of a virtual whitepack corresponding to the at least one surface of a whitepack (4) to which the customized design is to be applied through selection and placement of a design element (320,321,322) to be selected from a plurality of design elements;
- applying the determined customized design of the at least one surface of the virtual whitepack to the corresponding at least one surface of the whitepack (4).
